(19) Europäisches Patentamt
European Patent Office
Office européen des brevets

(11) **EP 1 660 594 B1**

(12) **EUROPÄISCHE PATENTSCHRIFT**

(45) Veröffentlichungstag und Bekanntmachung des Hinweises auf die Patenterteilung:
**02.07.2014 Patentblatt 2014/27**

(51) Int Cl.:
*C09C 1/52* (2006.01)     *C09C 1/50* (2006.01)
*C09C 1/48* (2006.01)     *F23D 14/22* (2006.01)

(21) Anmeldenummer: **04764417.4**

(22) Anmeldetag: **24.08.2004**

(86) Internationale Anmeldenummer:
**PCT/EP2004/009439**

(87) Internationale Veröffentlichungsnummer:
**WO 2005/033217 (14.04.2005 Gazette 2005/15)**

(54) **RUSS, VERFAHREN ZUR HERSTELLUNG VON RUSS ODER ANDEREN FLAMMENAEROSOLEN UND VORRICHTUNG ZUR DURCHF HRUNG DES VERFAHRENS**

CARBON BLACK, METHOD FOR THE PRODUCTION OF CARBON BLACK OR OTHER FLAME AEROSOLS, AND DEVICE FOR CARRYING OUT SAID METHOD

NOIR DE CARBONE, PROCEDE POUR PREPARER DU NOIR DE CARBONE OU D'AUTRES AEROSOLS INFLAMMABLES, ET DISPOSITIF POUR METTRE EN OEUVRE LE PROCEDE

(84) Benannte Vertragsstaaten:
**AT BE BG CH CY CZ DE DK EE ES FI FR GB GR HU IE IT LI LU MC NL PL PT RO SE SI SK TR**

(30) Priorität: **04.09.2003 DE 10340884**

(43) Veröffentlichungstag der Anmeldung:
**31.05.2006 Patentblatt 2006/22**

(73) Patentinhaber:
• **Orion Engineered Carbons GmbH**
**60528 Frankfurt am Main (DE)**
• **Riebel, Ulrich**
**03096 Briesen (DE)**

(72) Erfinder:
• **RIEBEL, Ulrich**
**03096 Briesen (DE)**
• **KATZER, Matthias**
**36381 Schlüchtern (DE)**
• **KRAUSS, Kai**
**63538 Grosskrotzenburg (DE)**

• **KARL, Alfons**
**63584 Gründau (DE)**
• **BEHNISCH, Jürgen**
**Madison, NJ 07940 (US)**

(74) Vertreter: **f & e patent**
**Fleischer, Engels & Partner mbB, Patentanwälte**
**Braunsberger Feld 29**
**51429 Bergisch Gladbach (DE)**

(56) Entgegenhaltungen:
**EP-A- 1 055 877     EP-A2- 0 156 390**
**US-A- 4 302 423**

• **PATENT ABSTRACTS OF JAPAN Bd. 018, Nr. 291 (C-1208), 3. Juni 1994 (1994-06-03) & JP 06 057170 A (TOKAI CARBON CO LTD), 1. März 1994 (1994-03-01)**

Bemerkungen:
Die Akte enthält technische Angaben, die nach dem Eingang der Anmeldung eingereicht wurden und die nicht in dieser Patentschrift enthalten sind.

EP 1 660 594 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Herstellung von Ruß oder anderen Flammenaerosolen sowie eine Vorrichtung zur Durchführung des Verfahrens.

Mittels des erfindungsgemäßen Verfahrens soll Ruß in Form von Aerosolen mit reproduzierbaren und einstellbaren Eigenschaften erzeugt werden. Derartige Eigenschaften sind die Ruß-Konzentration und die Partikelgrößenverteilung, der Agglomerationszustand und die chemische Zusammensetzung. Derartige Aerosole werden benötigt, um z. B. Filter, Elektroabscheider oder Katalysatoren hinsichtlich der Rußabscheidung zu testen. Weiterhin können die so gewonnenen Aerosole abgeschieden werden, um z. B. Pigmente oder Füllstoffe zu erzeugen.

Das Verfahren ist auch geeignet, um andere, in Flammen erzeugbare Aerosole wie z. B. $SiO_2$ oder $TiO_2$ mit besonderen Eigenschaften zu erzeugen.

Aus der Literatur sind bislang 2 Verfahren zur Erzeugung von Test-Aerosolen aus Ruß bekannt geworden.

Beim Lichtbogen-Verfahren (C. Helsper, W. Mölter, G. Wenninger: Investigation of a New Aerosol Generator for the Production of Carbon Aggregate Particles. Atmospheric Environment, Vol. 27A (1993), pp 1271 - 1275) wird zwischen zwei Kohlenstoff-Elektroden, die sich in Argongas befinden, in kurzen Zeitabständen ein Lichtbogen gezündet. Dabei wird eine geringe Menge des Elektrodenmaterials verdampft, das im Argon-Strom zu feinen Rußteilchen kondensiert, die mit dem Argonstrom ausgetragen werden. Das Verfahren hat zwei Nachteile: Erstens besteht der erzeugte Ruß ausschließlich aus Kohlenstoff, während reale Ruße stets Anteile von Kohlenwasserstoffen und Sauerstoff enthalten, die die Eigenschaften in sehr starkem Maße beeinflussen. Zweitens können mit diesem Verfahren nur sehr geringe Mengen an Aerosol erzeugt werden, die für die obengenannten Anwendungen meist nicht ausreichen.

Beim Löschgas-Verfahren (L. Jing: Neuer Russgenerator für Verbrennungsrußteilchen zur Kalibrierung von Partikelmessgeräten. OFMETInfo Vol. 7 (2000), no. 2, pp 8 - 12) wird eine Diffusionsflamme durch Zuführen einer großen Menge an Löschgas (z.B. Stickstoff) abgekühlt und zum Erlöschen gebracht. Bei diesem Verfahren können zwar Ruße mit realistischer chemischer Zusammensetzung erzeugt werden. Problematisch ist der sehr hohe Verbrauch an Löschgas, was erhebliche Kosten verursacht. Daher ist auch dieser Typ vom Rußaerosol-Generator bisher nur für sehr geringe Mengenströme realisiert worden.

Das Dokument EP 1 055 877 A offenbart ein Verfahren zur Erzeugung von Russaerosolen, bei dem in einem Brennraum in einer Diffusionsflamme Ruß erzeugt werden.

In der Patentschrift JP 06, 057170, A wird ein Verfahren zur Herstellung von Russ offenbart, bei dem eine Flamme gegen eine Stahlplatte, auf dessen Oberfläche ein Wasserfilm vorhanden ist, gelenkt wird.

In der Patentschrift EP 0 156 390 wird ein Russ offenbart, der einen pH-Wert kleiner 6 und einen Glührückstand <0.01% aufweist.

Der Erfindung liegt daher die Aufgabe zugrunde, ein Verfahren bereitzustellen, durch das große Mengen von Rußaerosol kostengünstig und mit geringem Aufwand bereitgestellt werden können.

Dadurch entsteht ein Ruß, der eine stabile Dispersion bilden kann und gleichzeitig eine hohe Reinheit aufweist.

Die Aufgabe wird erfindungsgemäß durch ein Verfahren mit dem Merkmal des Anspruchs 1 gelöst. Dieses Verfahren besteht aus einer Kombination folgender Schritte:

a) Entzug der Wärme aus der Flamme durch Wärmeleitung und/oder

- strahlung, wobei die Wärme an eine feste, kalte Oberfläche oder eine Flüssigkeitsoberfläche abgegeben wird,

b) Ausbildung einer dünnen Gasgrenzschicht, beispielsweise aus Luft, zwischen der Flamme und der kühlenden Oberfläche, um die Ablagerung von Aerosolteilchen auf der Oberfläche zu verhindern,

c) Beschleunigung bzw. Dehnung der von der Flamme und der Grenzschicht gebildeten Strömung, um die Strömung laminar zu halten und eine möglichst dünne Grenzschicht zu erreichen,

d) Ableitung des gebildeten Aerosols aus der Nähe der kalten Oberfläche und

e) Reinigung der kühlenden Oberfläche.

Das Verfahren basiert auf dem aus der industriellen Rußherstellung bekannten Gasruß- oder Channelverfahren, das derart abgewandelt wird, dass der Ruß überwiegend als Aerosol anfällt. Beim Gasruß- oder Channelverfahren wird eine Diffusionsflamme gegen eine kalte Metalloberfläche gerichtet, wobei sich der Ruß direkt aus der Flamme an der kalten Oberfläche abscheidet und später von der Oberfläche abgeschabt wird.

Auch bei der vorliegenden Erfindung wird eine kalte Oberfläche genutzt, um der Flamme möglichst viel Wärme zu entziehen. Gleichzeitig wird jedoch verhindert, dass sich der Ruß auf der kalten Oberfläche absetzen kann. Dieses geschieht erfindungsgemäß, indem zwischen der Flamme und der kalten Oberfläche eine dünne Grenzschicht von partikelfreiem Gas eingefügt wird. Aufgrund der sehr hohen Wärmeableitung durch die Oberfläche ist es möglich, ein sauerstoffhaltiges Gas, wie beispielsweise Luft für die Erzeugung der Grenzschicht zu verwenden. Es kann aber auch ein sauerstofffreies Gas (z. B. $N_2$, $CO_2$) zugeführt werden, oder es kann eine sauerstoffarme Grenzschicht erzeugt werden, indem ein dünner, auf der kühlenden Oberfläche befindlicher Wasserfilm direkt durch die Hitze der Flamme verdampft wird.

Als kalte Oberfläche kann vorteilhaft ein ausreichend dickwandiger Körper aus Metall oder einem anderen hochwärmeleitfähigen Material eingesetzt werden. Zusätzlich kann die Oberfläche von der Rückseite durch Wasser oder Luft gekühlt werden. Als kalte Oberfläche kann aber auch ein strömender Flüssigkeitsfilm eingesetzt werden, der die aus der Flamme abzuführende Wärme durch Konvektion und durch Verdampfung abführen kann. Bevorzugte Ausgestaltungen des Verfahrens ergeben sich aus den sich an den Anspruch 1 anschließenden Unteransprüchen 2 bis 12.

Die eingangs gestellte Aufgabe wird auch durch eine Vorrichtung zur Durchführung des vorgenannten erfindungsgemäßen Verfahrens gelöst, bei der neben einer Flamme-Erzeugungseinrichtung und einer kühlenden Oberfläche, gegen die die erzeugte Flamme richtbar ist, eine Einrichtung zur Erzeugung einer gasförmigen Grenzschicht zwischen Oberfläche und Flamme vorhanden ist. Bevorzugte Ausgestaltungen der erfindungsgemäßen Vorrichtung ergeben sich aus den sich an den Anspruch 13 anschließenden Unteransprüchen 14 bis 20.

Weitere Einzelheiten und Vorteile der Erfindung werden anhand von in der Zeichnung dargestellten Unteransprüchen näher erläutert. Es zeigen:

Fig. 1:    schematisch mehrere Ausführungsbeispiele der erfindungsgemäßen Vorrichtung und

Fig. 2-8    weitere schematische Ausführungsformen der erfindungsgemäßen Vorrichtung.

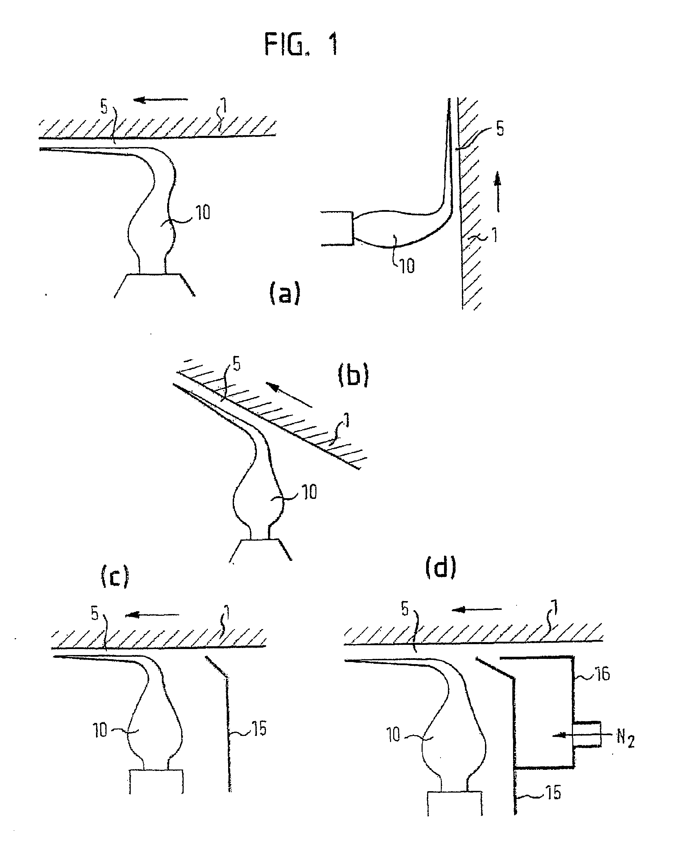

Wie in Fig. 1 anhand unterschiedlicher Konfigurationen gezeigt, wird eine Flamme 10 gegen eine kühlende Oberfläche 1 gerichtet, wobei zwischen der Flamme 10 und der kühlenden Oberfläche eine Grenzschicht 5 erzeugt wird. Entsprechend der Fig. 1a wird zur Erzeugung der Grenzschicht die kühlende Oberfläche senkrecht zur Achse der Flamme 10 in Pfeilrichtung bewegt. In Fig. 1b wird die kühlende Oberfläche 1 schräg zur Achse der Flamme 10 bewegt.

Wie aus Fig. 1c ersichtlich, kann zusätzlich ein verstellbares Leitblech 15 vorgesehen sein, dass eine Einstellung der Grenzschichtdicke erlaubt und verhindert, dass die Flamme durch Turbulenzen gestört wird. Eine weitere Variante entsprechend der Fig. 1c sieht vor, dass das Leitblech 15 mit einer Zuführung 16 für ein Gas versehen ist, um die Grenzschicht mit einem gewünschten speziellen Gas, beispielsweise $N_2$ anzureichern.

Alternativ oder zusätzlich kann ein Film von Wasser oder einer anderen leicht verdampfbaren, nicht brennbaren Flüssigkeit auf die kühlende Oberfläche aufgetragen werden, um die Kühlwirkung zu verbessern und zugleich bei der Berührung der heißen Flammengase mit der Oberfläche eine flammenkühlend wirkende Dampf-Grenzschicht zu entwickeln. Der Flüssigkeitsfilm kann in bekannter Weise, z. B. durch Aufsprühen der Flüssigkeit, durch Eintauchen der Oberfläche in ein Bad, durch Auftragswalzen etc. erzeugt werden. Dabei kann es vorteilhaft sein, die Oberfläche aufzurauhen und mit einer dünnen Schicht eines saugfähigen Materials zu beschichten.

Weitere Wege zur Erzeugung einer geeigneten Grenzschicht bestehen darin, dass die kühlende Oberfläche durch eine strömende, verdampfbare Flüssigkeit gebildet wird, oder aus einem porösen Material, z. B. Sintermaterial besteht, aus dem ein Gas oder eine verdampfbare Flüssigkeit austritt.

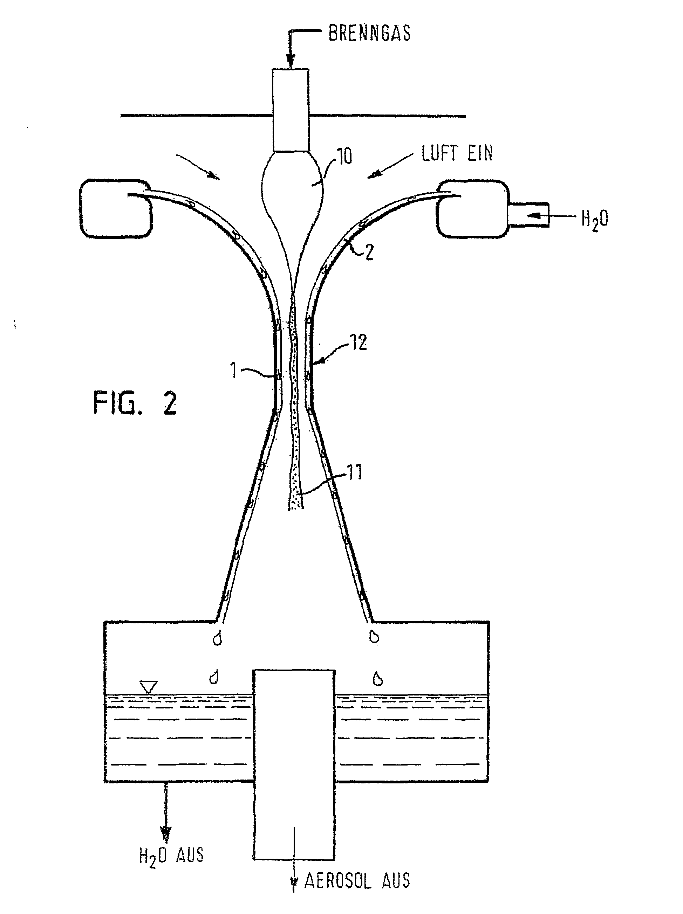

Eine Störung der Grenzschicht durch Turbulenzen kann besonders wirksam vermieden werden, wenn die Aerosolerzeugung in einer beschleunigten Strömung stattfindet. Hierzu kann, wie in Fig. 2 gezeigt, ein Strömungskanal zwischen zwei kühlenden Oberflächen 1 gebildet werden, wobei die zu kühlende Flamme 10 und die umgebenden Grenzschichten 5 im konvergenten Teil 12 eines Kanals bis hin zur engsten Stelle trotz hoher Strömungsgeschwindigkeiten in einem laminaren Strömungszustand gehalten werden können. Auch in einer konvergenten Düse mit einer kühlenden Oberfläche kann diese Wirkung erzielt werden. In der in Fig. 2 dargestellten Ausführungsvariante der Erfindung wird die kühlende Oberfläche in Form eines Wasserfilms 2 bereitgestellt. Durch die abwärts gerichtete und beschleunigte Strömung der Flamme 10 und der Verbrennungsgase wird die Entstehung von Turbulenzen und somit die unerwünschte Vermischung des entstehenden Rußaerosols 11 mit dem Gas oder Dampf in der Grenzschicht weitgehend vermieden.

Trotz der Grenzschicht ist es möglich, dass ein geringer Teil des erzeugten Rußes auf der kühlenden Oberfläche abgeschieden wird. Daher kann es vorgesehen sein, die kühlende Oberfläche an einem Schaber, einer Bürste, einer Pressluftdüse, einem Flüssigkeitsbad oder einer anderen geeigneten Vorrichtung vorbeizuführen, um die Oberfläche sauber zu halten.

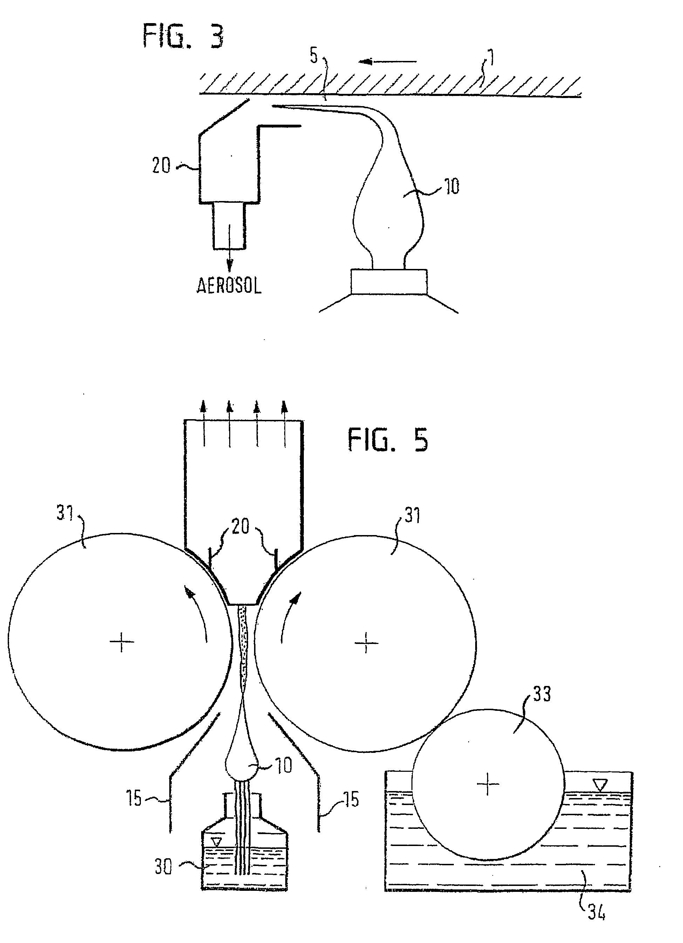

Bei der Erzeugung von Ruß besteht die besondere Schwierigkeit, dass sich ein erheblicher Teil des Aerosols in direkter Nähe zur kühlenden Oberfläche befindet. Durch die Bewegung der kühlenden Oberfläche oder durch Turbulenzen der Strömung kann dieser Teil des Aerosols unkontrolliert verteilt oder auf der Oberfläche abgeschieden werden. Um das Rußaerosol aber möglichst direkt und verlustarm abzuführen, ist es in einer Ausführungsvariante gemäß Abbildung 3 vorgesehen, das oberflächennahe Aerosol direkt nach seiner Erzeugung durch ein Leitblech 20 von der kühlenden Oberfläche abzustreifen und zu sammeln. Alternativ oder zusätzlich kann durch eine hier nicht näher dargestellte Düse eine Gasströmung zugeführt werden, die das Aerosol von der kühlenden Oberfläche ablöst.

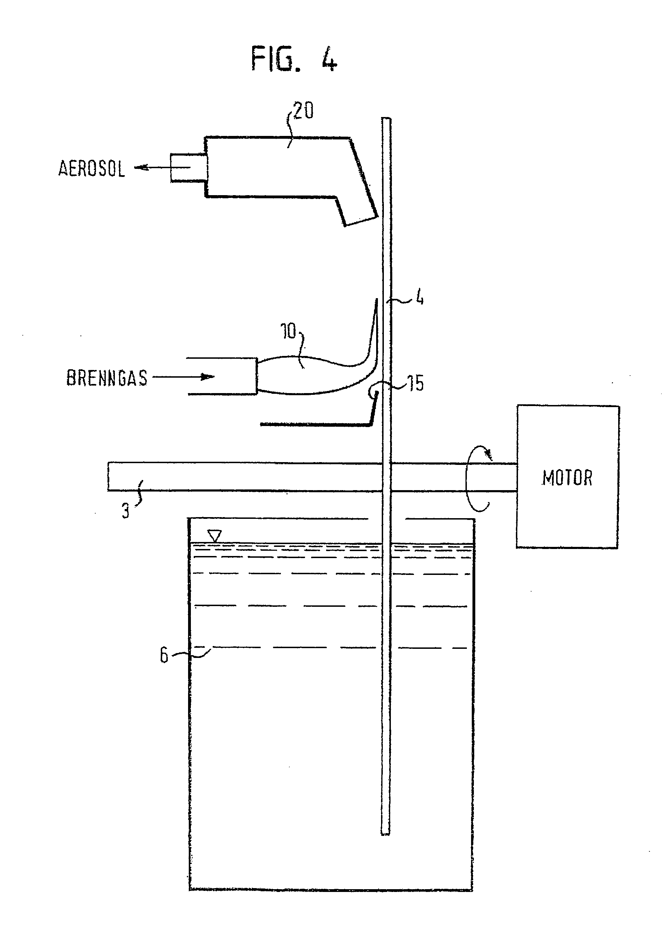

In Fig. 4 ist eine Anordnung gezeigt, bei der die kühlende Oberfläche durch eine um eine horizontale Achse 3 rotierende Metallplatte 4 realisiert ist. Zur Kühlung und zur Beschichtung mit einem Flüssigkeitsfilm kann die Metallplatte 4 in ein Wasserbad 6 eintauchen. Im oberen Teil werden eine oder mehrere Flammen 10 von einer oder von beiden Seiten auf die Metallplatte 4 gerichtet. Zusätzlich sind Leitbleche 15 zur Einstellung der Grenzschicht sowie ein Leitblech 20 zum Sammeln des Aerosols vorgesehen. Die Metallplatte kann durch einen Schaber oder eine Bürste (hier nicht dargestellt), durch einen Gasstrahl oder durch Beschallung mit Ultraschall während des Durchgangs durch das Wasserbad gereinigt werden.

Die in Fig. 4 gezeigte Vorrichtung ist vor allem geeignet, um den Ruß durch die Verbrennung von Gasen oder verdampften Flüssigkeiten zu erzeugen. Wenn der Ruß auf der Basis einer brennbaren Flüssigkeit erzeugt werden soll, ist die in Fig. 5 gezeigte Anordnung besonders vorteilhaft, da die Flamme 10 senkrecht steht und mit einem Dochtbrenner 30 erzeugt wird. Eine weitere Besonderheit besteht darin, dass durch zwei rotierenden Walzen 31 zwei kühlende Oberflächen bereitgestellt werden. Erfindungsgemäß ist vorgesehen, dass der Abstand zwischen den Walzen, die Rotationsgeschwindigkeit der Walzen sowie die am Walzenspalt anliegende Druckdifferenz einstellbar sind, um die Flamme zu einer dünnen Schicht auszuziehen und besonders schnell abzukühlen. Weiterhin sind Leitbleche 15 zum Einstellen der Grenzschicht und Leitbleche 20 zum Sammeln des Aerosols vorgesehen. Bei Bedarf können auch die Walzen 31 mit einer verdampfenden Flüssigkeit beschichtet werden, beispielsweise durch eine Auftragswalze 33 die in ein entsprechendes Flüssigkeitsbad 34 eintaucht. Schließlich kann vorgesehen werden, die Walzen von innen zu kühlen, beispielsweise durch Spülen mit einer Kühlflüssigkeit (hier nicht näher gezeigt).

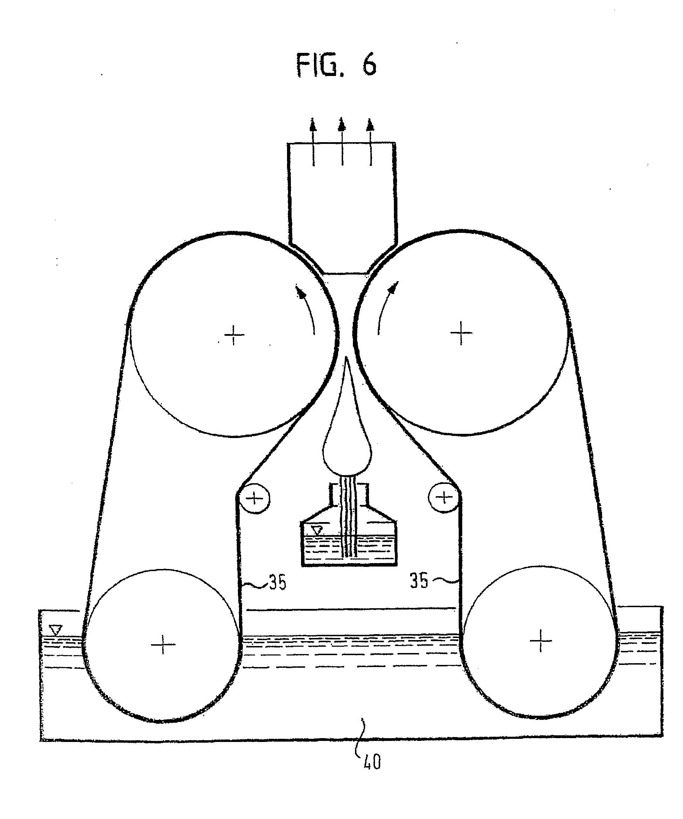

In Fig. 6 ist eine weitere Variante dargestellt, bei der die kühlenden Oberflächen durch umlaufende Bänder 35, beispielsweise aus Metall oder einem saugfähigen Textil gebildet sind. Diese Variante ist besonders geeignet, wenn die kühlende Oberfläche befeuchtet oder in dem Flüssigkeitsbad 40 gereinigt werden soll.

Die übrigen Komponenten in der Ausführungsvariante gemäß Fig. 6 entsprechen denjenigen gemäß Fig. 5, so dass sie hier keiner weiterer Erläuterung bedürfen.

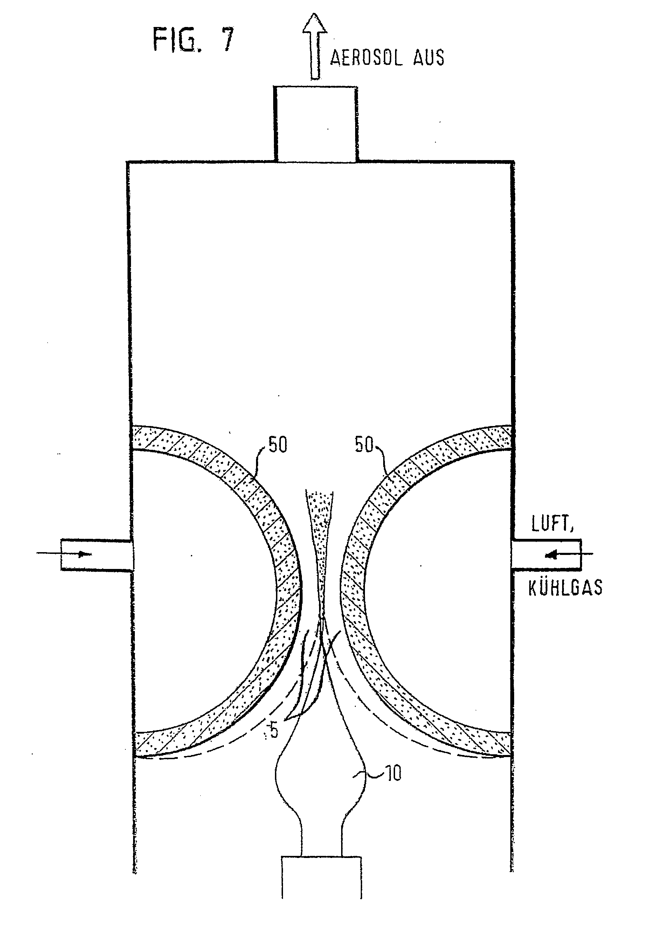

Schließlich zeigt die Fig. 7 eine Variante, bei der die aerosolfreien Grenzschichten 5 ohne bewegte Teile erzeugt werden. Die Grenzschicht wird in diesem Fall erfindungsgemäß durch die Permeation eines Gases durch eine poröse Oberfläche 50 erzeugt. Durch das Anlegen einer Druckdifferenz zur Beschleunigung der Strömung im Spalt wird die Flamme 10 auf die Spaltmitte zentriert und es wird verhindert, dass sich Turbulenzen ausbilden können.

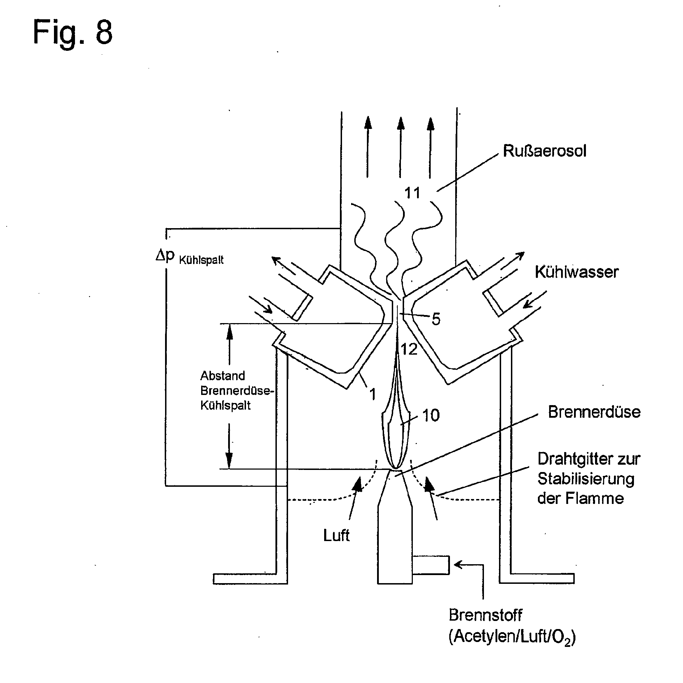

In einer bevorzugten Ausführungsform wird eine Vorrichtung gemäß Figur 8 eingesetzt. Diese Vorrichtung entspricht der in Figur 2 dargestellten Ausführungsvariante mit dem Unterschied, dass die kühlende Oberfläche in Form einer Metalloberfläche bereit gestellt wird, die von der Rückseite durch Wasser gekühlt wird. Ein weiteres Unterscheidungsmerkmal ist die Richtung der Strömungsführung. In der in Figur 8 dargestellten Ausführungsvariante wird anstelle einer abwärts gerichteten Strömung eine aufwärts gerichtete Strömung der Flamme und der Verbrennungsgase bevorzugt.

Das erfindungsgemäße Verfahren kann auch mit dem in DE 103 51 737.5 beschriebenen Aerosolverfahren kombiniert werden, um eine entsprechende Strukturabsenkung zu erzielen. Dabei wird eine Salzlösung, beispielsweise eine Kaliumsalzlösung, mit einem Gas in ein Aerosol überführt und anschließend in die Rußbildungszone eingebracht. Beispielsweise kann in der bevorzugten Ausführungsform gemäß Figur 8 das Aerosol in den Rußrohstoff vor dem Brenner eingemischt oder zusammen mit dem Rußrohstoff eingedüst werden.

Dadurch entsteht ein ungesichteter, unbehandelter Ruß, welcher dadurch gekennzeichnet ist, dass der pH-Wert kleiner gleich 6,0, vorzugsweise kleiner gleich 5,0, besonders bevorzugt kleiner gleich 4,0, ist, der Glührückstand kleiner gleich 0,1%, vorzugsweise kleiner gleich 0,05%, besonders bevorzugt kleiner gleich 0,02%, ist, und der 5μm-Siebrückstand kleiner gleich 200 ppm, vorzugsweise kleiner gleich 150 ppm, besonders bevorzugt kleiner gleich 100 ppm, ist.

Unter unbehandeltem Ruß wird ein Ruß verstanden, der nicht nachbehandelt ist, beispielsweise durch Nachoxidation oder chemische Oberflächenmodifizierung.

Unter ungesichtetem Ruß wird ein Ruß verstanden, der nicht mit Hilfe eines Luftstromes klassiert wird.

Der ungesichtete, unbehandelte Ruß kann ein Gasruß, Furnaceruß, Channelruß, Flammruß, Inversionsruß, bekannt aus DE 195 21 565, dotierter Ruß, Thermalruß, Acetylenruß, Lichtbogenruß oder Plasmaruß sein.

Der Ruß kann eine Transmission größer gleich 95%, vorzugsweise größer gleich 97%, besonders bevorzugt größer gleich 98%, haben.

Der Ruß kann einen Flüchtigengehalt bei 950°C von größer gleich 1,0%, vorzugsweise größer gleich 1,5%, besonders bevorzugt größer gleich 2,0%, haben.

Der Ruß kann einen Ölbedarf von größer gleich 250ml/100g, vorzugsweise größer gleich 300ml/100g, besonders bevorzugt größer gleich 350ml/100g, haben.

Der Ruß kann als Füllstoff, Verstärkerfüllstoff, UV-Stabilisator, Leitfähigkeitsruß oder Pigment verwendet werden.

Der Ruß kann in Kautschuk, Kunststoff, Druckfarben, Tinten, Inkjet-Tinten, Tonern, Lacken, Farben, Papier, Bitumen, Beton und anderen Baustoffen eingesetzt werden. Der erfindungsgemäße Ruß kann als Reduktionsmittel in der Metallurgie angewendet werden.

Die Ruße haben die Vorteile, daß diese eine stabile Dispersion (niedriger pH-Wert) bilden und gleichzeitig eine hohe Reinheit (niedriger Aschegehalt und niedriger 5μm-Siebrückstand) aufweisen. Durch die hohe Reinheit ergeben sich wesentliche Vorteile in der Anwendung. Der niedrige Gehalt an löslichen Substanzen (niedriger Aschegehalt) ermöglicht die Herstellung sehr stabiler Dispersionen, zum Beispiel wässrige oder lösemittelhaltige Dispersionen für Lackanwendungen oder Tinten. Dies bietet Vorteile bei der Herstellung und Lagerung. Die hohe Stabilität derartiger Dispersionen ermöglicht eine Steigerung des Feststoffgehaltes, was wiederum zahlreiche Vorteile mit sich bringt, wie beispielsweise reduzierte Herstell- und Transportkosten. Desweiteren zeichnen sich derartige Dispersionen durch eine längere Lagerstabilität aus.

Der niedrige Gehalt an nichtlöslichen partikulären Substanzen ermöglicht die Herstellung von Stippen-armen Folien und Lackierungen. Desweiteren wird die Abrasion von Druckplatten, beispielsweise beim Zeitungsdruck, reduziert, wodurch die Schärfe des Druckbildes länger erhalten bleibt. Auch ergeben sich längere Standzeiten von Filtern und Strainer-Sieben, beispielsweise bei der Herstellung von Tintenformulierungen und Kunststoff-Masterbatchen.

Beispiele

Bestimmungsmethoden

pH-Wert

Die Bestimmung des pH-Wertes wird nach DIN EN ISO 787-9 durchgeführt.

Glührückstand

Die Bestimmung des Glührückstandes wird nach DIN 53586 (bzw. ISO 1125) durchgeführt.

5μm-Siebrückstand

Die Bestimmung des 5μm-Siebrückstandes dient der Bestimmung des Gehalts an "grobteiligen", wasserunlöslichen Verunreinigungen, wie beispielsweise Koks, keramische Bestandteile, Metall oder Metalloxide, im Größenbereich unterhalb von 45 μm. Sie wird mittels einer kommerziell erhältlichen Siebapparatur unter Verwendung eines Siebes mit einer Maschenweite von 0,005 mm entsprechend der folgenden Vorschrift durchgeführt:

Geräte:

Siebapparatur (Fa. Topas GmbH, Dresden) bestehend aus:
Elektromagnetischer Sieberreger (EMS 755)
Ultraschall Desintegrator (UDS 751)
Feinstkornprüfsieb (5μm, fakultativ: 10μm, 15μm, 20μm, 25μm, 30μm)
Spezial-Stativ incl. rutschfeste Stativplatte
Analysenwaage (Genauigkeit 0,1mg)
Spatel
Propellerrührer
Ultraschallbad
1 1-Becherglas zum Ansetzen der Netzmittellösung
250 ml-Becherglas zum Ansetzen der Dispersion
1 1-Becherglas zum Auffangen des Filtrats
Trockenschrank, eingestellt auf 80°C
Netzmittel Hydropalat 3065, Artikel-Nr. 582930 888 (Fa. Henkel KGaA)

Prüfen der Siebe:

Das einzusetzende Feinstkornprüfsieb wird vor jeder Benutzung unter dem Lichtmikroskop auf Schäden hin untersucht.

Probenvorbereitung:

Die Proben werden 1 Stunde im Trockenschrank getrocknet und anschließend 30 min. im Exsikator abgekühlt. Bei frischen Proben entfällt die Trocknung, und die Proben können direkt untersucht werden.

Durchführung der Analyse:

Herstellen der Netzmittellösung:

Zum Herstellen der 10%igen Netzmittellösung werden 100g Hydropalat (w=65%) in einem 11-Becherglas abgewogen und bis auf 650 ml mit destilliertem Wasser aufgefüllt. Die Lösung wird bei angemessener Geschwindigkeit (kein Einrühren von Luft) 5 min. gerührt. Anschließend wird die Lösung filtriert.

Herstellen der Dispersion:

100-150 ml 10%ige Netzmittellösung werden in ein 250 ml Becherglas überführt. In die Lösung werden unter angemessenem Rühren ca. 15g Ruß zudosiert. Die Rußeinwaage wird auf einer Analysenwaage genau bestimmt und notiert. Die Lösung wird nun 5 min. weiter gerührt. Nach dem Rühren werden am Rührer anhaftende Rückstände mittels dest. Wasser in die Lösung gespült. Anschließend kommt das Becherglas für 5 min. ins Ultraschallbad. Abschließend wird die Lösung noch weitere 2 min. mittels UDS 751 behandelt. Durchführung der Siebung:

Das ausgewogene Feinstkornsieb (Genauigkeit: 0,1 mg) wird in den EMS 755 eingespannt, wobei auf festen Sitz des Siebes zu achten ist. Der UDS 751 wird in der Mitte des Siebes platziert und befestigt. Der Abstand zum Siebboden (ca. 5 mm) wird mittels Distanzstück bei jeder Messung konstant gehalten.

Der EMS wird auf Stufe 4,5 eingestellt und eingeschaltet. Der UDS wird auf die mittlere Stufe eingestellt und ebenfalls eingeschaltet.
Nun wird die Rußdispersion langsam in das Sieb gefüllt. Der Abstand zum oberen Siebrand sollte nicht kleiner als 3 mm werden. Der Füllstand ist während der Analyse möglichst konstant zu halten.
Ist die komplette Rußdispersion überführt, wird das Becherglas mit kleinen Mengen dest. Wasser gespült und über das Sieb gegeben. Dies wird solange wiederholt, bis das Becherglas sauber ist.
Von jetzt an wird das Sieb solange mit kleinen Mengen destilliertem Wasser gespült, bis das ablaufende Filtrat klar ist.
Das Sieb wird nun in ein 600 ml Becherglas gegeben. Das Becherglas wird ca. 1 cm mit destilliertem Wasser gefüllt und für 2 min. ins Ultraschallbad gegeben.
Anschließend wird das Sieb noch einmal kurz in den EMS eingespannt und ein letztes Mal klar gespült.
Das Sieb wird nun im Trockenschrank bei 80°C eine halbe Stunde getrocknet, anschließend im Exsikkator abgekühlt und auf der Analysenwaage ausgewogen.

Auswertung:

Der Siebrückstand wird wie folgt berechnet:

$$\text{Siebrückstand [ppm]} = \frac{m_R - m_L}{E} * 10^6$$

$m_R$ - Masse Sieb mit Rückstand [g]
$m_L$ - Masse Sieb leer [g]
E - Einwaage [g]

Transmission

Die Bestimmung der Transmission wird nach der Norm ASTM D 1618, die Bestimmung der Toluol-Verfärbung, durchgeführt.

Primärteilchengröße

Die Bestimmung der mittleren Primärteilchengröße und die Standardabweichung der Primärteilchengrößenverteilung werden mit Hilfe von Transmissions-Elektronenmikroskop-Aufnahmen, die auf transparentem Film nachvergrößert werden, durch Messen und Auszählen von mindestens 2000 Primärrußteilchen und Berechnung des arithmetischen Mittelwertes und der Standardabweichung bestimmt. Der halbautomatische Teilchengrößenanalysator TGZ 3 von der Firma Carl Zeiss nach Endter und Gebauer [F. Endter und H. Gebauer, Optik, 13, 97 (1956)] erleichtert hierbei die Auszählarbeit.

Flüchtigen Anteile

Die Bestimmung der flüchtigen Anteile bei 950°C wird nach DIN 53552 durchgeführt.

Ölbedarf

Die Bestimmung des Ölbedarfs (Fließpunktmethode) wird nach DIN EN ISO 787-5 durchgeführt.

BET-Oberfläche

Die Bestimmung der BET-Oberfläche wird nach DIN 66131-2 (bzw. ISO 4652) durchgeführt.

Schwarzzahl My

Die Bestimmung der Schwarzzahl My von Pulverpigmentrußen wird nach DIN 55979 durchgeführt.

STSA-Oberfläche

Die Bestimmung der STSA-Oberfläche wird nach ASTM Vorschrift D-5816-99 durchgeführt.

Aggregatgrößenverteilung:

Zur Messung der Aggregatgrößenverteilungskurven wird eine Scheibenzentrifuge BI-DCP mit Rotlicht-Diode der Firma Brookhaven verwendet. Dieses Gerät wird speziell für die Bestimmung von Aggregatgrößenverteilungskurven von feinteiligen Feststoffen aus Extinktionsmessungen entwickelt und ist mit einem automatischen Meß- und Auswertungsprogramm zur Ermittlung der Aggregatgrößenverteilung ausgerüstet.

Zur Durchführung der Messungen wird zunächst eine Dispersionslösung aus 200 ml Ethanol, 5 Tropfen Ammoniaklösung und 0,5 g Triton X-100 und Auffüllen mit demineralisiertem Wasser auf 1000 ml hergestellt. Weiterhin wird eine Spinflüssigkeit aus 0,5 g Triton X-100, 5 Tropfen Ammoniaklösung und Auffüllen mit demineralisiertem Wasser auf 1000 ml angefertigt.

Danach werden 20 mg Ruß mit 20 ml Dispersionslösung versetzt und in einem Kühlbad für die Dauer von 4,5 Minuten mit 100 Watt Ultraschalleistung (80% Pulse) in der Lösung suspendiert.

Vor Beginn der eigentlichen Messungen wird die Zentrifuge 30 Minuten bei einer Drehzahl von 11000 min$^{-1}$ betrieben. In die sich drehende Scheibe wird 1 ml Ethanol eingespritzt und danach vorsichtig mit 15 ml Spinflüssigkeit unterschichtet. Nach etwa einer Minute werden 250 $\mu$l der Rußsuspension eingespritzt und das Meßprogramm des Gerätes gestartet und die Spinflüssigkeit in der Zentrifuge mit 50 $\mu$l Dodecan überschichtet. Von jeder zu messenden Probe wird eine Doppelbestimmung vorgenommen.

Die Auswertung der Rohdatenkurve erfolgt dann mit dem Rechenprogramm des Gerätes unter Berücksichtigung der Streulichtkorrektur und mit automatischer Basislinien-Anpassung.

Der $\Delta$D50-Wert ist die Breite der Aggregatgrößenverteilungskurve bei der halben Peakhöhe. Der $D_w$-Wert ist der volumengewichtete Mittelwert der Aggregatgrößenverteilung. Der $D_{mode}$-Wert (Modalwert) ist die Aggregatgröße mit der größten Häufigkeit (Peakmaximum der Aggregatgrößenverteilungskurve).

Beispiel 1-4:

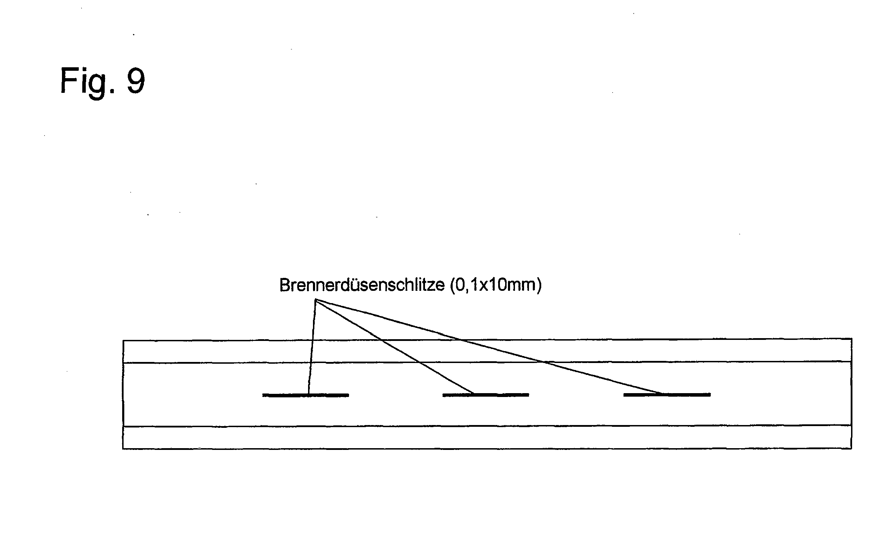

In einer Vorrichtung gemäß Figur 8 werden die erfindungsgemäßen Ruße mit den in der Tabelle 1 angegebenen Einstellungen hergestellt. Als Brennstoff wird Acetylen verwendet. Dieser kann wahlweise mit Luft oder reinem Sauerstoff vorgemischt werden. Ein statischer Mischer sorgt für eine ausreichende Vermischung der beiden Gase vor Eintritt in die Brennerdüse. Die verwendete Brennerdüse besteht aus drei rechteckförmigen Schlitzen die in einem Abstand von 10 mm voneinander angeordnet sind. Die Schlitzbreite beträgt 0,1mm und die Schlitzlänge 10mm, sodass sich eine Düsenquerschnittsfläche von insgesamt 3 mm$^2$ ergibt. Die Brennerdüse ist in Figur 9 als Aufsicht skizziert. Die resultierende Flamme wird schließlich durch Anlegen eines Unterdrucks in den eigentlichen Kühlspalt gesogen und gequencht. Der Ruß wird anschließend von den Abgasen abgetrennt und analysiert.

Tabelle 1

| | Beispiel 1 | Beispiel 2 | Beispiel 3 | Beispiel 4 |
|---|---|---|---|---|
| Flammenvormischung | Acetylen/ - | Acetylen/ Luft | Acetylen/ Sauerstoff | Acetylen/ Sauerstoff |
| Normvolumenströme [L/h] | 74/- | 74/52 | 74/31 | 74/37 |
| Breite und Länge des Kühlspalts [mm] | 1/140 | 1/140 | 1/140 | 1/140 |
| Kühlende Oberfläche im Spalt [mm$^2$] | 2820 | 2820 | 2820 | 2820 |
| Druckdifferenz am Kühlspalt [mbar] | 11 | 3 | 2,5 | 1,6 |
| Abstand Brennerdüse-Kühlspalt [mm] | 100 | 80 | 80 | 60 |

In Tabelle 2 sind die analytischen Werte der erfindungsgemäßen Ruße aufgeführt. Zusätzlich sind die analytischen Werte von Vergleichsrußen aufgeführt. Die Vergleichsruße werden nach dem in'DE-OS 2404536 beschriebenen Degussa-Gasrußverfahren hergestellt, aber im Gegensatz zu den Handelsprodukten nicht gesichtet.

Tabelle 2

| | Beispiel 1 | Beispiel 2 | Beispiel 3 | Beispiel 4 | Vergleichsruß 1: ungesichteter FW 1 | Vergleiche ruß 2: ungesichtet S 160 |
|---|---|---|---|---|---|---|
| pH-Wert | 3,3 | 3,6 | 3,9 | 3,8 | 4,2 | 3,8 |
| Glührückstand [%] | 0,01 | 0,02 | 0,01 | 0,01 | 0,02 | 0,02 |
| 5$\mu$m-Siebrückstand [ppm] | 11 | 85 | 72 | 33 | 290 | 370 |
| Schwarzzahl My | 239 | 259 | 265 | 283 | 273 | 263 |
| Transmission [%] | 99 | 99 | 98 | 99 | 99 | 100 |
| Mittlere Primärteilchengröße [nm] | 34 | 21 | 17 | 13 | 15 | 20 |
| Standardabweichung der Primärteilchengröße [-] | 0,23 | 0,42 | 0,24 | 0,14 | 0,14 | 0,22 |
| Mittlere Aggregatgröße, volumengewichtet [nm] | 107 | 64 | 59 | 49 | 52 | 66 |
| Modalwert der Aggregatgrößenverteilung, volumengewichtet [nm] | 100 | 50 | 45 | 43 | 46 | 55 |
| Delta D50/Mode [-] | 0,75 | 0,84 | 0,63 | 0,61 | 0,61 | 0,68 |
| Flüchtige bei 950°C [%] | 2,5 | 4,7 | 4,6 | 7,6 | 4,8 | 4,3 |
| Ölbedarf [g/100g] | 391 | 409 | 670 | 837 | 840 | 620 |
| STSA-Oberfläche [m2/g] | 63 | 131 | 244 | 230 | | |
| BET Oberfläche [m2/g] | 73 | 156 | 317 | 270 | 260 | 150 |

Die erfindungsgemäßen Ruße zeigen gegenüber den Vergleichsrußen einen deutlich geringeren 5$\mu$m-Siebrückstand. Dieser niedrige Gehalt an nichtlöslichen partikulären Substanzen ermöglicht die Herstellung von Stippenarmen Folien und Lackierungen.

**Patentansprüche**

1. Verfahren zur Herstellung von Ruß oder anderen Flammenaerosolen, **gekennzeichnet durch** folgende Schritte:

   a) Entzug der Wärme aus der Flamme **durch** Wärmeleitung und/oder -strahlung, wobei die Wärme an eine feste, kalte Oberfläche oder eine Flüssigkeitsoberfläche abgegeben wird,
   f) Ausbildung einer dünnen Gasgrenzschicht, beispielsweise aus Luft, zwischen der Flamme und der kühlenden Oberfläche, um die Ablagerung von Aerosolteilchen auf der Oberfläche zu verhindern,
   g) Beschleunigung bzw. Dehnung der von der Flamme und der Grenzschicht gebildeten Strömung, um die Strömung laminar zu halten und eine möglichst dünne Grenzschicht zu erreichen,
   h) Ableitung des gebildeten Aerosols aus der Nähe der kalten Oberfläche und
   i) Reinigung der kühlenden Oberfläche.

2. Verfahren nach Anspruch 1, **dadurch gekennzeichnet, dass** die Grenzschicht durch Zuführen einer Gasströmung zwischen die Flamme und die kühlende Oberfläche erzeugt wird.

3. Verfahren nach Anspruch 1 oder 2, **dadurch gekennzeichnet, dass** die Grenzschicht mittels einer Bewegung der kühlenden Oberfläche in den Bereich der Flamme geführt wird.

4. Verfahren nach einem der Ansprüche 1 bis 3, **dadurch gekennzeichnet, dass** die Grenzschicht mittels eines Leitbleches zwischen die Flamme und die kühlende Oberfläche eingeführt wird.

5. Verfahren nach einem der Ansprüche 1 bis 3, **dadurch gekennzeichnet, dass** die Grenzschicht durch eine Durchströmung der Öffnungen oder Poren besitzenden kühlenden Oberfläche mit einem Gas oder Dampf erzeugt wird.

6. Verfahren nach einem der Ansprüche 1 bis 3, **dadurch gekennzeichnet, dass** die Grenzschicht durch die Verdampfung einer Flüssigkeit auf der kühlenden Oberfläche erzeugt wird.

7. Verfahren nach einem der Ansprüche 1 bis 6, **dadurch gekennzeichnet, dass** die Flamme zwischen zwei kühlenden Oberflächen mit zwei Grenzschichten geführt wird.

8. Verfahren nach einem der Ansprüche 1 bis 7, **dadurch gekennzeichnet, dass** die Flamme in einem konvergenten Spalt oder einem konvergenten Kanal mit kühlenden Oberflächen und mit Grenzschichten abgekühlt wird.

9. Verfahren nach einem der Ansprüche 1 bis 8, **dadurch gekennzeichnet, dass** die Flamme in einem konvergenten Spalt zwischen zwei sich drehenden Walzen mit kühlenden Oberflächen und mit Grenzschichten abgekühlt wird.

10. Verfahren nach einem der Ansprüche 1 bis 9, **dadurch gekennzeichnet, dass** die das Aerosol enthaltende Strömungsschicht von der kühlenden Oberfläche durch eine mit einem Gas durchströmte Düse entfernt wird.

11. Verfahren oder Vorrichtung nach einem der Ansprüche 7 bis 10, **dadurch gekennzeichnet, dass** die Strömungsgeschwindigkeit in der engsten Stelle des konvergenten Spalts wesentlich höher gewählt wird als die Austrittsgeschwindigkeit der Flamme aus dem Brenner.

12. Verfahren nach einem der Ansprüche 7 bis 11, **dadurch gekennzeichnet, dass** die Strömungsgeschwindigkeit in der engsten Stelle des konvergenten Spalts über die am Spalt anliegende Druckdifferenz gemessen und geregelt wird.

13. Verfahren nach einem der Ansprüche 7 bis 12, **dadurch gekennzeichnet, dass** die kühlende Oberfläche eine Metalloberfläche ist, die von der Rückseite durch Wasser gekühlt wird.

14. Vorrichtung zur Durchführung des Verfahrens nach einem der Ansprüche 1 bis 13, **gekennzeichnet durch** eine Flammerzeugungseinrichtung und eine kühlende Oberfläche, gegen die die erzeugte Flamme richtbar ist, sowie Einrichtungen zur Erzeugung einer gasförmigen Grenzschicht zwischen Oberfläche und Flamme.

15. Vorrichtung nach Anspruch 14, **dadurch gekennzeichnet, dass** ein Leitblech zwischen der Flamme und der kühlenden Oberfläche angeordnet ist.

**16.** Vorrichtung nach Anspruch 14 oder 15, **dadurch gekennzeichnet, dass** die kühlende Oberfläche Öffnungen oder Poren besitzt, durch die kühlendes Gas durchtreten kann.

**17.** Vorrichtung nach einem der vorangehenden Ansprüche, **dadurch gekennzeichnet, dass** die kühlende Oberfläche durch zwei sich drehende Walzen gebildet ist.

**18.** Vorrichtung nach einem der vorangehenden Ansprüche, **dadurch gekennzeichnet, dass** die kühlenden Oberflächen des konvergenten Spaltes aus jeweils einem umlaufenden Band, das im Bereich des Spaltes über eine Walze geführt wird und das außerdem ein Flüssigkeitsbad zur Reinigung und Kühlung durchläuft, bestehen.

**19.** Vorrichtung nach Anspruch 18, **dadurch gekennzeichnet, dass** das Band porös ist, wobei es beispielsweise aus einem Textil besteht, und mit Flüssigkeit getränkt ist.

**20.** Vorrichtung nach einem der vorangehenden Ansprüche, **dadurch gekennzeichnet, dass** die Spaltweite in der engsten Stelle des konvergenten Spalts im Bereich von 0,5 bis 10 mm einstellbar ist.

**21.** Vorrichtung nach einem der vorangehenden Ansprüche, **dadurch gekennzeichnet, dass** der Abstand zwischen dem Fußpunkt der Flamme und der kühlenden Oberfläche einstellbar ist.

**22.** Vorrichtung nach einem der vorangehenden Ansprüche, **dadurch gekennzeichnet, dass** der Abstand zwischen dem Fußpunkt der Flamme und der engsten Stelle des konvergenten Spalts einstellbar ist.

**Claims**

**1.** A method for the production of carbon black or other flame aerosols,
**characterized by** the following steps:

> a) removal of the heat from the flame by thermal conduction and/or radiation, the heat being released at a solid, cold surface or a liquid surface,
> f) formation of a thin gas boundary layer, for example of air, between the flame and the cooling surface, in order to prevent the accumulation of aerosol particles on the surface,
> g) acceleration or expansion of the flow formed by the flame and the boundary layer, in order to keep the flow laminar and to achieve as thin a boundary layer as possible,
> h) withdrawal of the aerosol formed from the vicinity of the cold surface and
> i) cleaning of the cooling surface.

**2.** The method as claimed in claim 1, **characterized in that** the boundary layer is produced by feeding a gas stream between the flame and the cooling surface.

**3.** The method as claimed in claim 1 or 2, **characterized in that** the boundary layer is guided into the region of the flame by means of a movement of the cooling surface.

**4.** The method as claimed in any of claims 1 to 3, **characterized in that** the boundary layer is introduced between the flame and the cooling surface by means of a deflector plate.

**5.** The method as claimed in any of claims 1 to 3, **characterized in that** the boundary layer is produced by a flow of a gas or vapor through the cooling surface having openings or pores.

**6.** The method as claimed in any of claims 1 to 3, **characterized in that** the boundary layer is produced by the vaporization of a liquid on the cooling surface.

**7.** The method as claimed in any of claims 1 to 6, **characterized in that** the flame is guided between two cooling surfaces having two boundary layers.

**8.** The method as claimed in any of claims 1 to 7, **characterized in that** the flame is cooled in a convergent gap or convergent channel having cooling surfaces and having boundary layers.

9. The method as claimed in any of claims 1 to 8, **characterized in that** the flame is cooled in a convergent gap between two rotating rolls having cooling surfaces and having boundary layers.

10. The method as claimed in any of claims 1 to 9, **characterized in that** the aerosol-containing flow layer is removed from the cooling surface by means of a nozzle through which gas flows.

11. The method or device as claimed in any of claims 7 to 10, **characterized in that** the flow velocity at the narrowest point of the convergent gap is chosen to be substantially higher than the exit velocity of the flame from the burner.

12. The method as claimed in any of claims 7 to 11, **characterized in that** the flow velocity at the narrowest point of the convergent gap is measured and regulated by means of the pressure difference present at the gap.

13. The method as claimed in any of claims 7 to 12, **characterized in that** the cooling surface is a metal surface which is cooled from the back by water.

14. A device for carrying out the method as claimed in any of claims 1 to 13, **characterized by** a flame generation device and a cooling surface against which the flame produced can be directed, and setups for producing a gaseous boundary layer between surface and flame.

15. The device as claimed in claim 14, **characterized in that** a deflector plate is arranged between the flame and the cooling surface.

16. The device as claimed in claim 14 or 15, **characterized in that** the cooling surface has openings or pores through which cooling gas can pass.

17. The device as claimed in any of the preceding claims, **characterized in that** the cooling surface is formed by two rotating rolls.

18. The device as claimed in any of the preceding claims, **characterized in that** the cooling surfaces of the convergent gas consist in each case of a revolving belt which is guided over a roll in the region of the gap and which moreover passes through a liquid bath for cleaning and cooling.

19. The device as claimed in claim 18, **characterized in that** the belt is porous, for example consisting of a textile, and is impregnated with a liquid.

20. The device as claimed in any of the preceding claims, **characterized in that** the gap width at the narrowest point of the convergent gap can be adjusted in the range from 0.5 to 10 mm.

21. The device as claimed in any of the preceding claims, **characterized in that** the distance between the base of the flame and the cooling surface can be adjusted.

22. The device as claimed in any of the preceding claims, **characterized in that** the distance between the base of the flame and the narrowest point of the convergent gap can be adjusted.

**Revendications**

1. Procédé de production de noir de carbone ou d'autres aérosols à flamme,
   **caractérisé par** les étapes suivantes :

   a) retrait de la chaleur de la flamme par conduction et/ou rayonnement thermique, dans lequel la chaleur est émise sur une surface solide froide ou une surface liquide
   f) formation d'une couche limite de gaz mince, par exemple, d'air, entre la flamme et la surface refroidissante pour empêcher l'accumulation de particules d'aérosol sur la surface,
   g) accélération ou dilatation du courant formé par la flamme et la couche limite pour conserver un courant laminaire et obtenir une couche limite aussi mince que possible,
   h) dérivation de l'aérosol formé à la proximité de la surface froide et
   i) nettoyage de la surface refroidissante.

**2.** Procédé selon la revendication 1, **caractérisé en ce que** la couche limite est produite par l'acheminement d'un courant de gaz entre la flamme et la surface refroidissante.

**3.** Procédé selon la revendication 1 ou 2, **caractérisé en ce que** la couche limite est conduite par un mouvement de la surface refroidissante dans la région de la flamme.

**4.** Procédé selon l'une des revendications 1 à 3, **caractérisé en ce que** la couche limite est introduite au moyen d'un déflecteur entre la flamme et la surface refroidissante.

**5.** Procédé selon l'une des revendications 1 à 3, **caractérisé en ce que** la couche limite est produite par un écoulement dans la surface possédant des ouvertures ou des pores avec un gaz ou une vapeur.

**6.** Procédé selon l'une des revendications 1 à 3, **caractérisé en ce que** la couche limite est produite par évaporation d'un liquide sur la surface refroidissante.

**7.** Procédé selon l'une des revendications 1 à 6, **caractérisé en ce que** la flamme est conduite entre deux surfaces refroidissantes avec deux couches limites.

**8.** Procédé selon l'une des revendications 1 à 7, **caractérisé en ce que** la flamme est refroidie dans une fente convergente ou un canal convergent avec des surfaces refroidissantes et des couches limites.

**9.** Procédé selon l'une des revendications 1 à 8, **caractérisé en ce que** la flamme est refroidie dans une fente convergente entre deux cylindres rotatifs avec des surfaces refroidissantes et des couches limites.

**10.** Procédé selon l'une des revendications 1 à 9, **caractérisé en ce que** la couche de courant contenant l'aérosol est retirée de la surface refroidissante par une buse traversée par un gaz.

**11.** Procédé ou dispositif selon l'une des revendications 7 à 10, **caractérisé en ce que** la vitesse d'écoulement dans les endroits les plus étroits de la fente convergente est choisie de façon à être essentiellement supérieure à la vitesse de sortie de la flamme du brûleur.

**12.** Procédé selon l'une des revendications 7 à 11, **caractérisé en ce que** la vitesse d'écoulement dans l'endroit le plus étroit de la fente convergente est mesurée et régulée par la différence de pression au niveau de la fente.

**13.** Procédé selon l'une des revendications 7 à 12, **caractérisé en ce que** la surface refroidissante est une surface métallique qui est refroidie par de l'eau par la face arrière.

**14.** Dispositif de réalisation du procédé selon l'une des revendications 1 à 13, **caractérisé par** un dispositif de production d'une flamme et d'une surface refroidissante contre laquelle la flamme produite peut être orientée, et des systèmes de production d'une couche limite sous forme de gaz entre la surface et la flamme.

**15.** Dispositif selon la revendication 14, **caractérisé en ce que** le déflecteur est disposé entre la flamme et la surface refroidissante.

**16.** Dispositif selon la revendication 14 ou 15, **caractérisé en ce que** la surface refroidissante possède des ouvertures ou des pores par lesquels le gaz refroidissant peut sortir.

**17.** Dispositif selon l'une des revendications précédentes, **caractérisé en ce que** la surface refroidissante est formée par deux cylindres rotatifs.

**18.** Dispositif selon l'une des revendications précédentes, **caractérisé en ce que** la surface refroidissante de la fente convergente consiste respectivement en une bande sans fin qui est conduite dans la région de la fente par un cylindre et qui traverse en outre un bain de liquide pour le nettoyage et le refroidissement.

**19.** Dispositif selon la revendication 18, **caractérisé en ce que** la bande est poreuse, laquelle consiste par exemple en un textile et est imbibée de liquide.

**20.** Dispositif selon l'une des revendications précédentes, **caractérisé en ce que** la largeur de la fente dans l'endroit le plus étroit de la fente convergente peut être ajustée dans la plage de 0,5 à 10 mm.

21. Dispositif selon l'une des revendications précédentes, **caractérisé en ce que** l'intervalle entre le point de base de la flamme et la surface refroidissante peut être ajusté.

22. Dispositif selon l'une des revendications précédentes, **caractérisé en ce que** l'intervalle entre le point de base de la flamme et l'endroit le plus étroit de la fente convergente peut être ajusté.

# FIG. 1

(a)

(b)

(c)

(d)

FIG. 2

FIG. 3

AEROSOL

FIG. 5

# FIG. 4

AEROSOL ←

BRENNGAS →

20

10

4

15

3

6

MOTOR

# FIG. 6

FIG. 7

Fig. 8

## Fig. 9

Brennerdüsenschlitze (0,1x10mm)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1055877 A
- JP 6057170 A
- EP 0156390 A
- DE 10351737
- DE 19521565
- DE OS2404536 A

**In der Beschreibung aufgeführte Nicht-Patentliteratur**

- **C. HELSPER ; W. MÖLTER ; G. WENNINGER.** Investigation of a New Aerosol Generator for the Production of Carbon Aggregate Particles. *Atmospheric Environment,* 1993, vol. 27A, 1271-1275
- **L. JING.** Neuer Russgenerator für Verbrennungsrußteilchen zur Kalibrierung von Partikelmessgeräten. *OFMETInfo,* 2000, vol. 7 (2), 8-12
- **F. ENDTER ; H. GEBAUER.** *Optik,* 1956, vol. 13, 97